(19) Europäisches Patentamt

European Patent Office

Office européen des brevets

(11) **EP 4 704 081 A1**

(12) **EUROPEAN PATENT APPLICATION**

(43) Date of publication:
04.03.2026 Bulletin 2026/10

(21) Application number: 25188299.9

(22) Date of filing: **09.07.2025**

(51) International Patent Classification (IPC):
*G10L 21/0208* (2013.01) *G06N 3/02* (2006.01)
*G10L 25/30* (2013.01)

(52) Cooperative Patent Classification (CPC):
**G10L 21/0208; G06N 3/02; G06N 3/044;
G06N 3/045; G06N 3/08; G06N 3/084; G10L 25/30**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 28.08.2024 US 202463687856 P
27.01.2025 US 202519038191

(71) Applicant: **INTEL Corporation
Santa Clara, CA 95054 (US)**

(72) Inventors:
• **Kupryjanow, Adam**
**80-298 Gdansk (PL)**
• **Rosenkiewicz, Sebastian**
**80-034 Gdansk (PL)**
• **Pindor, Lukasz**
**83-000 Pruszcz Gdanski (PL)**

(74) Representative: **Goddar, Heinz J.
Boehmert & Boehmert
Anwaltspartnerschaft mbB
Pettenkoferstrasse 22
80336 München (DE)**

(54) **PLATFORM SELF-NOISE SILENCER WITH ADVANCED FAN NOISE MITIGATION**

(57)     Systems and methods are provided an audio signal enhancement system that attenuates platform fan noise. Fan noise is a common type of self-noise in laptops and other devices, and fan noise can significantly degrade the quality of audio captured by built-in microphones. A neural network model is provided that enhances microphone Signal-to-Noise Ratio (SNR) and Signal-to-Distortion-plus-Noise Ratio (SDNR). The systems and methods also reduce algorithmic latency. The model architecture includes a Recurrent Neural Network, and a custom Gated Recurrent Unit layer is provided that uses fewer unique matrix weights and fewer biases and has fewer compute operations using fewer parameters. A platform self-noise suppression system is provided that eliminates low-amplitude platform self-noise signals. The model can predict when the platform fan is active, and remove the platform noise. In some examples, when the model predicts that the platform fan is not active, the model focuses on removing microphone self-noise.

**EP 4 704 081 A1**

**Description**

Cross-Reference to Related Applications

This application is related to and claims the benefit of priority under 35 U.S.C. §119(e) to U.S. Provisional Application No. 63/687,856 titled "Platform Self-Noise Silencer with Advanced Fan Noise Mitigation" filed on August 28, 2024, which is hereby incorporated by reference in its entirety.

Technical Field

This disclosure relates generally to noise reduction, and in particular to isolating and reducing noise signals.

Background

Many platforms and devices have active cooling fans which generate noise that can interfere with an audio signal. Various solutions have been developed to filter out noise in audio signals. For example, high signal-to-noise ratio (SNR) microphones can help filter out noise, but generally don't address the issue of fan noise. Similarly, directional microphones can pick up sound from a specific direction, reducing background noise. Software solutions to noise reductions can include filters, such as high pass filters that filter out lower frequency noise and allow signals above a selected threshold to pass through. Another software solution is adaptive noise cancelation, in which background noise is subtracted out from the noisy speech signal.

Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 shows a high level diagram of a platform self-noise suppression system FIG. 1 shows a high level diagram of a platform self-noise suppression system 100, according to various embodiments, according to various embodiments.
FIGS. 2A-2B illustrate steps for a STFT transformation.
FIGS. 2C-2D illustrate steps for a low-latency STFT transformation, according to various embodiments.
FIG. 3A illustrates an RNN-Mixer architecture, according to various embodiments.
FIG. 3B illustrates a light RNN-Mixer architecture 350, according to various embodiments.
FIG. 4 is a flowchart illustrating a method for a platform self-noise suppression system, in accordance with various embodiments.
FIG. 5 is a block diagram of an example deep learning system, in accordance with various embodiments.
FIG. 6 is a block diagram of an example computing device, in accordance with various embodiments.

Description

*Overview*

Systems and methods are provided an audio signal enhancement system that attenuates platform fan noise. Fan noise is a common type of self-noise in laptops and other devices, and fan noise can significantly degrade the quality of audio captured by built-in microphones. Generally, minimizing the impact of fan noise includes the use of expensive hardware components, yet even with such designs, the fan's presence can still be discernible in recordings. The systems and methods disclosed herein include a neural network model that enhances microphone Signal-to-Noise Ratio (SNR) and Signal-to-Distortion-plus-Noise Ratio (SDNR) by over 9dB. The systems and methods also reduce algorithmic latency from about 24 ms (milliseconds) to about 5 ms.

In some implementations, a Short-Time Fourier Transform (STFT) can be used to generate a magnitude spectrum, which can be used as the input to a neural network model for noise reduction and removal. A low-latency STFT (LL-STFT) is provided with asymmetric analysis and synthesis windows. In particular, there is asymmetry in the analysis and synthesis windows in the LL-STFT. Additionally, the LL-STFT has a smaller output frame size than input frame size, and a smaller frame overlap size than a traditional STFT. Using a LL-STFT as described herein results in a substantial reduction in latency, from a traditional 24 ms latency to about a 5 ms latency.

In various implementations, the neural network for audio signal enhancement discussed herein includes a feature extractor, which includes a LL-STFT to achieve lower latency. In some embodiments, the neural network model and the training procedures are tailored to leverage the neural network accelerator and optimize feature extraction for audio digital signal processing (DSP) computations. The model architecture can include a regular Recurrent Neural Network (RNN) Mixer (RRM) and a light RNN-Mixer (LRM). The LRM can be a streamlined model that can be readily implemented using general machine learning frameworks, while the RRM includes a custom Gated Recurrent Unit (GRU) layer discussed herein. The custom GRU layer uses fewer unique matrix weights and fewer biases and has fewer compute operations using fewer parameters.

In various implementations, systems and methods are provided herein for a platform self-noise suppression system (*i.e.*, a platform self-noise silencer) designed to eliminate low-amplitude platform self-noise signals. In some examples, the low-amplitude platform self-noise signals may be added to the source signal during an augmentation step of model training. Source signals, such as speech or music, inherently include a microphone self-noise component, as they are recorded using imperfect microphones. Thus, source signals include an ideal signal plus microphone self-noise. When a platform fan is active, the source signal also includes the platform self-noise signals. In various implementations, the systems and methods provided herein predict a noise component filter (as opposed to a source component filter). In some examples, the model predicts when the platform fan is active, and then focuses on removing the platform noise while retaining the microphone self-noise. In some examples, when the model predicts that the platform fan is not active, the model focuses on removing microphone self-noise.

For purposes of explanation, specific numbers, materials, and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A and/or B" or the phrase "A or B" means (A), (B), or (A and B). For the purposes of the present disclosure, the phrase "A, B, and/or C" or the phrase "A, B, or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value based on the input operand of a particular value as described herein or as known in the art. Similarly, terms indicating orientation of various elements, e.g., "coplanar," "perpendicular," "orthogonal," "parallel," or any other angle between the elements, generally refer to being within +/- 5-20% of a target value based on the input operand of a particular value as described herein or as known in the art.

In addition, the terms "comprise," "comprising," "include," "including," "have," "having" or any other variation thereof, are intended to cover a non-exclusive inclusion. For example, a method, process, device, or system that comprises a list of elements is not necessarily limited to only those elements but may include other elements not expressly listed or inherent to such method, process, device, or systems. Also, the term "or" refers to an inclusive "or" and not to an exclusive "or."

The systems, methods, and devices of this disclosure each have several innovative aspects, no single one of which is solely responsible for all desirable attributes disclosed herein. Details of one or more implementations of the subject matter described in this specification are set forth in the description below and the accompanying drawings.

*Example Platform Self-Noise Suppression System*

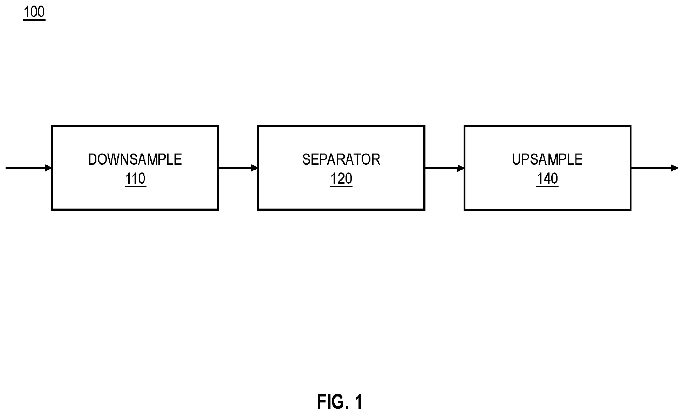

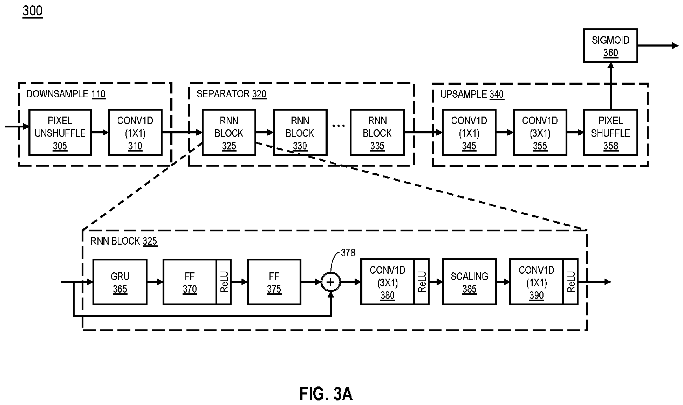

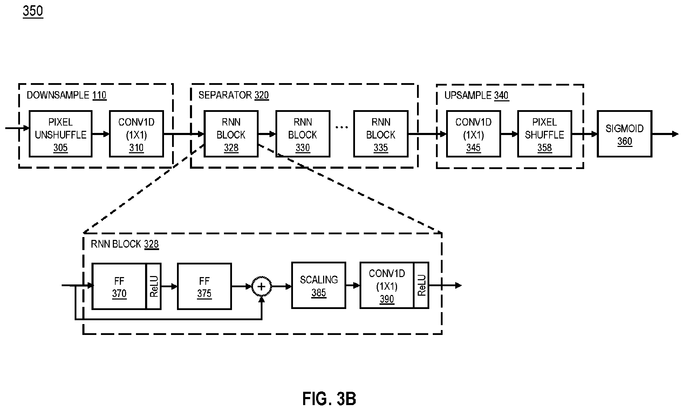

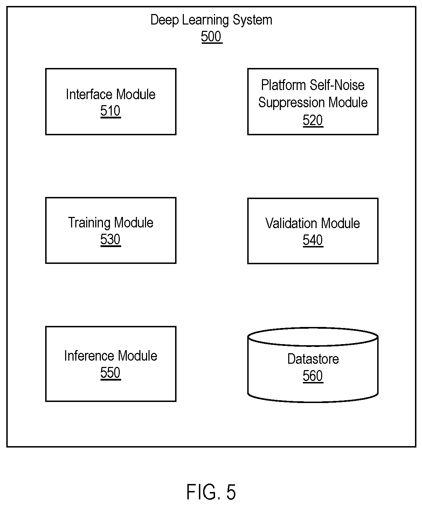

Systems and methods are presented for a platform self-noise suppression system that includes a causal model architecture that is both memory and compute efficient. FIG. 1 shows a high level diagram of a platform self-noise suppression system 100, according to various embodiments. In particular, the platform self-noise suppression system 100 includes a downsample block 110, a separator 120, and an upsample block 140. The platform self-noise suppression system 100 receives an input signal at a downsample block 110. In various embodiments, the input signal can be a magnitude spectrum of an audio input signal. The input signal is downsampled at the downsample block 110, and the downsampled signal is output to a separator 120. The separator can include a recurrent neural network (RNN), as described in greater detail below with respect to FIGS. 3A, 3B, and 5. A RNN is a type of artificial neural network that can be used to process sequential data such as audio signals. The separator 120 removes noise from the downsampled input signal. In some examples, the input signal is a magnitude spectrum, and the separator can remove noise from the downsampled signal based on the magnitude of identified noise at various frequencies. The output from the separator is a noise-reduced signal, such as a noise-reduced magnitude spectrum, and the separator output is received at the upsample block 140. The upsample block 140 upsamples the separator output to reconstruct the signal with noise removed and outputs a noise-reduced output signal.

According to various implementations, the input to the platform self-noise suppression system is an input feature. In particular, a magnitude spectrum of an audio input signal sample can be the input feature.

*Example Feature Extraction for Platform Self-Noise Suppression System*

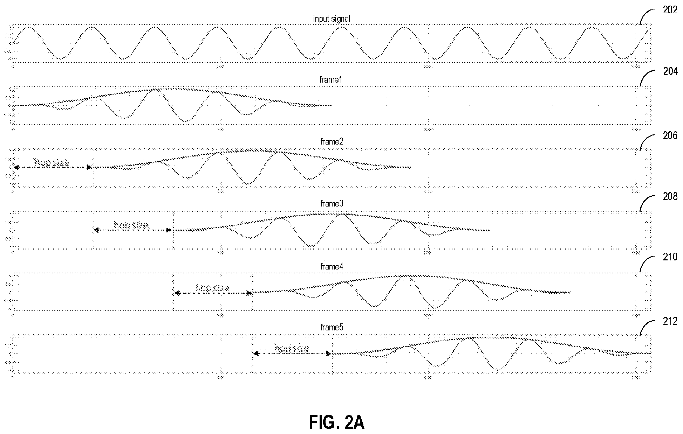

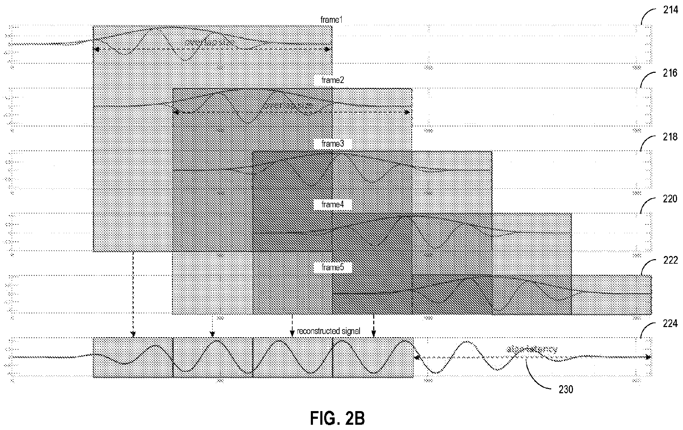

According to some embodiments, feature extraction is performed on an audio input signal to generate one or more features for inputting to the platform self-noise suppression system. In some examples, a magnitude spectrum is the input feature to the system. A magnitude spectrum of an audio input signal sample can be derived through Short-Time Fourier Transform (STFT) analysis. FIGS. 2A and 2B illustrate examples 200, 210 of STFT processing to generate magnitude spectra. Parameters defining STFT include input frame size (iFS), frame hop size (HS), frame overlap size (OS), output frame size (oFS), and algorithmic latency (AL). Relationships between these parameters can be defined as oFS = HS = (iFS - OS), and AL = OS. One common STFT configuration used for audio signal processing and audio enhancement includes an input frame size (iFS) of 32 ms and a HS of 8 ms, resulting in an AL of 24 ms.

FIG. 2A illustrates an analysis step for a STFT transformation. In particular, FIG. 2A shows an input signal in the top graph 202, and five input frames based on the input signal in graphs 204, 206, 208, 210, 212. The first input frame, shown in graph 204, begins at time 0. The second input frame, shown in graph 206, begins at time 0 + the hop size. The third input frame, shown in graph 208, begins at time 0 + the hop size + the hop size. The fourth input frame, shown in graph 210, begins at time 0 + the hop size + the hop size + the hop size. The fifth input frame, shown in graph 212, begins at time 0 + the hop size + the hop size + the hop size + the hop size. Thus, each subsequent input frame begins is one hop size after the current input frame.

FIG. 2B illustrates a synthesis step for the five input frames in graphs 214, 216, 218, 220, 222, and a graph 224 showing the reconstructed signal. In particular, FIG. 2B illustrates the synthesis step in graphs 214, 216, 218, 220 using the following parameters: iFS=768 samples, HS = 192 samples, OS = 576 samples, and oFS = 192 samples. The overlap size (OS) is highlighted by the gray shaded areas in the graph for each frame. The algorithmic latency 230 in the reconstructed signal is shown in the bottom graph 224 of FIG. 2B.

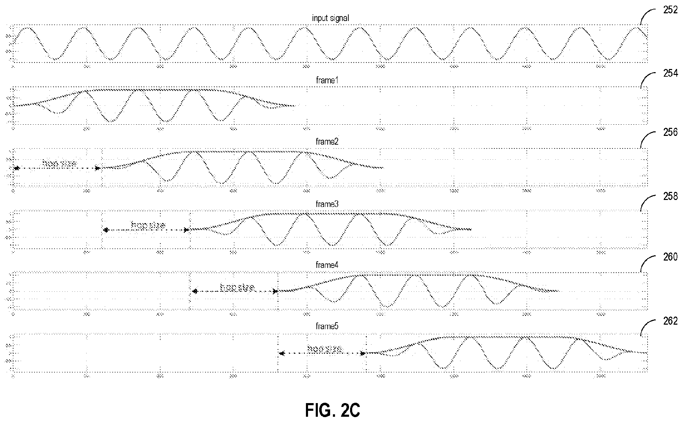

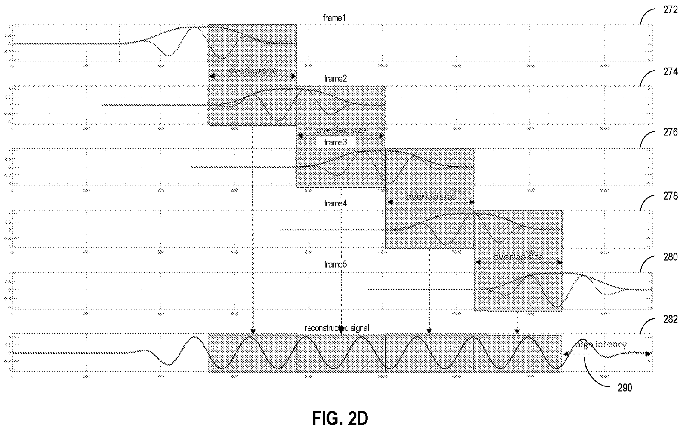

While STFT can enable excellent signal reconstruction, it also introduces significant latency in real-time applications. FIGS. 2C and 2D illustrate analysis and synthesis steps for a low-latency STFT. FIG. 2C shows an analysis step for a LL-STFT transformation, according to various embodiments. In particular, FIG. 2C illustrates an input signal in the top graph 252, and five input frames based on the input signal in graphs 254, 256, 258, 260, 262. The first input frame, shown in graph 254, begins at time 0. The second input frame, shown in graph 256, begins at time 0 + the hop size. The third input frame, shown in graph 258, begins at time 0 + (the hop size x2). The fourth input frame, shown in graph 260, begins at time 0 + (the hop size x3). The fifth input frame, shown in graph 262, begins at time 0 + (the hop size x4). Thus, each subsequent input frame begins is one hop size after the current input frame.

FIG. 2D illustrates a synthesis step for the five input frames in graphs 272, 274, 276, 278, 280, and a graph 282 showing the reconstructed signal. In particular, FIG. 2D illustrates the synthesis step in graphs 272, 274, 276, 278, 280 using the following parameters: iFS=768 samples, HS = 192 samples, OS = 192 samples, and oFS = 192 samples. The overlap size (OS), highlighted by the gray shaded areas in the graph for each frame, is significantly smaller than the overlap size of the graphs for the STFT transformation in FIG. 2B. The algorithmic latency 290 in the reconstructed signal for the LL-STFT transformation is shown in the bottom graph 282 of FIG. 2D, and is much smaller than the algorithmic latency 230 of the STFT transformation shown in FIG. 2B.

As shown in FIGS. 2C and 2D, the LL-STFT has asymmetric analysis and synthesis windows. Some distinctions between the conventional STFT and LL-STFT include the asymmetry of both the analysis and synthesis windows in LL-STFT. Additionally, the LL-STFT includes a significantly smaller oFS compared to iFS (oFS<<iFS) than a conventional STFT. In some examples, since AL equals OS, by setting OS to match HS, a LL-STFT can have an AL of 8 ms for an iFS of 32 ms and a HS of 8 ms, which is a substantial reduction from the traditional 24 ms latency. In some embodiments, a LL-STFT is implemented with a HS of 5 ms, resulting in an AL of 5 ms. In some embodiments, a LL-STFT is implemented with an OS that is less than HS, resulting in an AL that is less than 5ms. However, in some examples, an LL-STFT with an OS less than HS can adversely affect the quality of signal reconstruction, leading to some reconstruction error.

*Example Platform Self-Noise Suppression System*

Systems and methods are presented for a platform self-noise suppression system that includes a causal model architecture that is both memory and compute efficient. The model can include a recurrent neural network (RNN). A RNN is a type of artificial neural network that can be used to process sequential data such as audio signals. In some embodiments, the platform self-noise suppression system can be implemented as a regular RNN-Mixer (RRM), and in some embodiments, the platform self-noise suppression system can be implemented as a light RNN-Mixer (LRM). In some embodiments, the RRM features a custom Gated Recurrent Unit (GRU) layer. The LRM is a streamlined version of the RRM that can be implemented using various machine learning frameworks. In some examples, the LRM's simplicity makes it more accessible for practical applications than the RRM.

FIG. 3A illustrates an RNN-Mixer architecture, according to various embodiments of the disclosure. The RRM architecture of FIG. 3A includes three primary components: a downsample module 110, a separator 320, and an upsample module 340. During the downsampling phase, the number of channels is increased while the tensor height is reduced. The downsample module 110 includes a pixel unshuffle block 305 and a 1D pointwise convolution block 310. At the pixel unshuffle module 305, the input undergoes a pixel unshuffle operation. In some examples, the pixel unshuffle module 305 rearranges elements between channels and tensor height. In some examples, the pixel unshuffle module 305 alters the tensor's width. In various examples, the pixel unshuffle operation takes a tensor of shape ($*$, $C$, $H \times r$, $W$) and outputs a tensor of shape ($*$, $C \times r$, $H$, $W$), where r represents the downsampling factor. The output from the pixel unshuffle block 305 undergoes a pointwise convolution at the 1D pointwise convolution block 310. In particular, in various examples, a 1D pointwise convolution is applied to group features into subgroups, each subgroup containing similar information. Features can include frequencies, frequency bands, amplitudes, and other audio signal information. In some examples, subgroups include similar features that are in neighboring channels in feature space. For instance, information stored in neighboring channels can have similar frequency bands and similar amplitudes, and subgroups can include channels having similar features such as similar frequencies, similar frequency bands, similar amplitudes, and so on. Features having similar information can be grouped in a subgroup and treated as one group of values that is processed using the same weights and biases. In some examples, a subgroup can be treated as one input channel to the convolution layer. The 1D pointwise convolution can have a kernel size of one. In various examples, the downsample block 110 downsamples the input signal by a factor of about three. For instance, the downsample block 110 can receive an input signal having a size of 8x96, and the downsample block 110 can map the 96 channels to 32 channels and output a signal having a size of 8x32.

The output from the downsample module 110 is input to a separator 320. In some examples, the separator 320 includes a matrix of weights. The separator 320 can use previous output processed for a previous frame to determine the weights. The separator 320 can remove noise from the signal.

The separator 320 includes multiple RNN blocks 325, 330, 335, with the output from on RNN block being input to a subsequent RNN block. In particular, the separator 320 includes an RNN block repeated *D* times. In some embodiments, the separator 320 can include any number of RNN blocks, such as two RNN blocks, three RNN blocks, four RNN blocks, five RNN blocks, or more than five RNN blocks. Each RNN block 325, 330, 335 can include the elements shown in the blown-up view of the RNN block 325. In particular, the RNN block 325 includes a GRU layer 365, a first feed-forward layer 370, which includes a ReLU (rectified linear unit), a second feed-forward layer 375, an adder 378, 3x1 1D convolution layer 380, which includes another ReLU, a scaling layer 385, and a 1x1 1D convolution layer 390.

The input to the RNN block 325 is received at the GRU 365 and also received at the adder 378. The GRU 365 can be custom GRU, and performs a gating function, as described in greater detail below. The custom GRU 365 is designed to allow for a reduction in the number of model parameters. The output from the GRU 365 is input to the feed-forward layer 370 with the ReLU, and the output from the feed-forward layer 370 is input to the feed-forward layer 375. The output from the feed-forward layer 375 is added to the input to the RNN block 325 at the adder 378. The output from the adder 378 is processed by the 3x1 1D convolution layer 380, which includes another ReLU. The output from the 3x1 1D convolution layer 380 is scaled at a scaling layer 385, and then processed by the 1x1 1D convolution layer 390. The output from the RNN block 325 has a reduced noise compared to the input to the RNN block 325. The output from the RNN block 325 can be input to a subsequent RNN block 330. In various examples, the RNN block 330 can include the same components as the RNN block 325.

The output from the separator 320 is input to the upsample block 340. The upsample block 340 includes a 1x1 1D convolution layer 345, a 3x1 1D convolution layer 355, and a pixel shuffle block 358. The upsample block 340 performs an upsampling step to restore the original feature shape. In particular, the 1x1 1D convolution layer 345 performs a 1D pointwise convolution, and the 3x1 1D convolution layer 355 performs a 1D convolution using a kernel size of three. The pixel shuffle block 358 rearranges its input from a tensor of shape (*, $C \times r, H, W$) back into a tensor of shape (*, $C, H \times r, W$). In various embodiments, the output from the upsample block 340 is an output mask that represents a probability of useful signal presence in features space. The output mask can be processed at a sigmoid block 360 to generate the output from the RRM 300. In various examples, the sigmoid block 360 smooths the output mask.

FIG. 3B illustrates a light RNN-Mixer architecture 350, according to various embodiments of the disclosure. The LRM is a streamlined version of the RRM that can be implemented using various machine learning frameworks. Specifically, the LRM omits various blocks present in the RRM. For example, the LRM employs a standard GRU layer in the RNN Block 328, whereas the RRM uses a custom GRU layer. Additionally, the LRM omits the convolution operation performed by the 3x1 1D convolution layer 380 in the RNN, as well as the convolution operation performed by the 3x1 1D convolution layer 355 in the upsample block 340.

The custom GRU block 365 of FIG. 3A allows for a reduction in the number of model parameters as compared to a traditional GRU block. In particular, equations (1) - (4) below detail computations performed in a traditional GRU layer as implemented in some frameworks:

$$r_t = \sigma\big(W_{ir}x_t + b_{ir} + W_{hr}x_{(t-1)} + b_{hr}\big) \tag{1}$$

$$z_t = \sigma\big(W_{iz}x_t + b_{iz} + W_{hz}x_{(t-1)} + b_{hz}\big) \tag{2}$$

$$n_t = tanh\big(W_{in}x_t + b_{in} + r_t\odot(W_{hn}h_{(t-1)} + b_{hn})\big) \tag{3}$$

$$h_t = (1 - z_t)\odot n_t + z_t \odot h_{(t-1)} \tag{4}$$

Equations (5) - (8) represent an example of operations performed a custom GRU layer, such as the GRU block 365:

$$r_t = \sigma\big(W_{ir}r_{(t-1)} + W_i x_{(t-1)}\big) \tag{5}$$

$$z_t = \sigma\big(W_{iz}z_{(t-1)} + W_i x_{(t-1)}\big) \tag{6}$$

$$n_t = tanh\big(x_t + r_t\odot(W_{hn}h_{(t-1)})\big) + 1 \tag{7}$$

$$h_t = (n_t + 1)\odot(z_t + 1) \tag{8}$$

Examples of differences between traditional and custom GRU layers are summarized in Table 1.

TABLE 1

| No | Parameter | GRU | Custom GRU |
|---|---|---|---|
| 1 | Number of unique weight matrices | 6 | 4 |
| 2 | Number of biases | 6 | 0 |
| 3 | Gates sharing | ✕ | ✓ |
| 4 | Compute [MMAC/s] | 10.18 | 8.25 |
| 5 | Number of parameters | 6144 | 5408 |

Note that while the custom GRU can be more efficient, in various examples, the systems and methods presented herein for the platform self-noise suppression system can be implemented using a traditional GRU, as described with respect to the LRM 350 of FIG. 3B.

Table 2 presents examples of various hyper-parameter values for the RRM 300 and the LRM 350. In various examples, the values presented in Table 2 strike a balance between computational demand, memory efficiency, and audio quality. In some examples, when the platform self-noise suppression system is employed on mobile devices, an LRM architecture is used, as shown in FIG. 3B. According to various embodiments, the platform self-noise suppression system is compact, including less than about 63k parameters (e.g., 62,980 parameters), and using less than about 85 million (e.g., about 84.71 million) multiply-accumulate operations per second (MMac/s).

TABLE 2

| hyper-parameter | RRM | RLM |
|---|---|---|
| N | 768 | 768 |
| r | 96 | 32 |
| D | 6 | 6 |

According to some embodiments, the Platform Self-Noise Suppression (PSNS) task presupposes the additive nature of platform self-noise. Therefore, within the STFT domain, the signal captured by the built-in microphones, denoted as $X(k, n)$, can be expressed by the equation:

$$X(k, n) = S(k, n) + N(k, n) \qquad (9)$$

where $S(k, n)$ represents the source signal, which may include speech, music, or other noises excluding the platform's self-noise, while $N(k, n)$ represents the platform's self-noise. The objective of the PSNS task is to estimate the source signal, denoted as $\hat{S}(k, n)$, using the input from the microphone:

$$\hat{S}(k, n) = G(k, n) \cdot X(k, n) \qquad (10)$$

where $G(k, n)$ is the attenuation filter, $k$ represents the frequency bin, and $n$ represents the frame index. In various examples, the PSNS model is designed to estimate the attenuation filter $G(k, n)$, rather than the source signal directly. The indices $k$ and $n$ are omitted in the following equations.

The model can be trained using a combined loss function, which integrates a power-law compressed magnitude loss: $\lambda_{mag} = \langle |\hat{S}^c - S^c|^2 \rangle$
with a phase-aware compressed loss:

$$\lambda_{complex} = \langle |\hat{S}^c e^{j\varphi\hat{S}} - S^c e^{j\varphi S}|^2 \rangle$$

As described by the following equation:

$$\lambda_{mix} = 10 log_{10} \frac{(1-\beta)\lambda_{mag} + \beta\lambda_{complex}}{\langle |A^c|^2 \rangle + \varepsilon} + \varepsilon \qquad (11)$$

Here, $\beta$ is the mixing factor with a range of $0 \leq \beta \leq 1$, compression factor c is set to 0.2, $\varphi S$ and $\varphi \hat{S}$ represent the phase spectra of the target and estimated signals, respectively, and the (...) operator denotes averaging over frequency and time indices. In some examples, the attenuation filter $G(k, n)$ signifies the location of the source signal. In various examples, systems and methods discussed above can be implemented in a platform self-noise suppression system.

According to various embodiments, the PSNS module is engineered to eliminate low-amplitude platform self-noise signals, which are added to the source signal during the augmentation step of model training. Note that source signals, such as speech or music, inherently include a microphone self-noise component, as they are recorded using imperfect microphones. In some examples, the platform self-noise signal added during augmentation is of a lower level than the microphone self-noise present in the original recording of the useful signal. In such cases, the model may not remove the platform self-noise signal. This limitation can be better understood by reformulating the signal model to:

$$X = S_{ideal} + N_{mic-noise} + N_{p-noise} \qquad (12)$$

In this model, the digital recording of the source signal, S, includes the reference source signal, $S_{ref}$ and the self-noise of the microphone used for recording $N_{mic-noise}$. To address this limitation, systems and methods are provided to train the model to predict a noise component filter, $G_{\hat{N}}(k, n)$, in contrast to predicting a source component filter $G_{\hat{S}}(k, n)$.

The output from the model is given by:

$$\hat{S} = (1 - G_{\hat{N}}) \cdot X \qquad (13)$$

According to some examples, by focusing on the removal of $N_{p\text{-}noise}$ while retaining $N_{mic\text{-}noise}$, the model's behavior is more stable.

The systems and methods discussed herein enable the platform self-noise suppression model to perform noise reduction with greater precision than previous models, achieving increases in SNR and SDNR or 9 dB or more.

*Example Fan Noise Reduction*

In various embodiments, audio recordings can be categorized into two distinct groups: source (useful signal) and platform self-noise. During the augmentation process, both $X$ (the mixture) and $S_T$ (the model target signals) are generated. The noise category, $N_{p\text{-}noise}$, is the self-noise generated by the platforms. The source category includes a variety of signals that the PSNS is designed to process without any modifications, such as speech and music. In some examples, the objective of the PSNS is to accurately distinguish between these two categories, effectively reducing the platform self-noise while preserving the integrity of the source signals. The process of signal augmentation can be mathematically represented as $X = S + N_{p\text{-}noise}$, which describes the combination of the source signal with platform self-noise to create the augmented signal. The target signal, which the model aims to estimate, is derived using equation:

$$S_T = S + \mu \cdot N_{p\text{-}noise} \qquad (14)$$

where the parameter $\mu$ modulates the intensity of the denoising effect. However, the process does not encompass the routine for selecting mixture SNR, reverberation levels, or other complex acoustic characteristics. The focus is on the fundamental augmentation of the source signal with platform self-noise and the subsequent adjustment of the denoising intensity.

In various embodiments, systems and methods are provided for a model in which audio recordings are categorized into three types: source ($S$), platform self-noise ($N_{p\text{-}noise}$) and platform fan noise ($N_{fan\text{-}noise}$). Platform self-noise includes microphone self-noise, and can also include electrical noises generated inside the device (e.g., noise generated by capacitors) that is captured by the microphone. The signal augmentation process can be tailored to generate two distinct types of mixture and target pairs, referred to as type1 and type2. The type of mixture to be created can be determined probabilistically by designating a value for a probability $p$, where $p$ is the probability of each type of noise. In some examples, the probability $p$ is set at 0.3, such that the probability of the noise type being fan noise is 30%, and the probability of the noise type being self-noise is 70%. Thus, the probability $p$ is set such that one category of noise is added to the source signal at any given time. In some examples, the model focuses either on reduction of fan noise or on reduction of self-noise. Platform self-noise mixtures, including microphone self-noise, can be represented by:

$$X_{type1} = S + N_{p\text{-}noise} \qquad (15)$$

Platform fan noise mixtures can be represented by:

$$X_{type2} = S + N_{fan\text{-}noise} \qquad (16)$$

When the audio recording mixture is of type2, the model reduces fan noise. In various examples, when the audio recording mixture is of type2, the model removes fan noise. In some examples, when the audio recording mixture is of type2, as shown in equation (16), the denoising intensity can be effectively set to an infinite level by assigning a value of zero to the parameter $\mu$ in the target signal formula $S_T$, shown in equation (14), where $\mu$ attenuates the platform self-noise including the microphone self-noise. This technique can be designed to maintain a nearly constant output signal SNR, particularly when the fan is operational on the platform. As a result, the PSNS model delivers a consistent output SNR for inputs with varying levels of fan noise.

*Example Quantization Step*

Prior to deploying the model on a platform, such as a computing device, a post-training quantization step can be conducted on the weights and biases. This process involves converting the floating-point values of the weights, which may span a wide range within a single layer, into a more restricted range of integer values. Such a conversion can potentially substantially degrade the model's performance due to the loss of precision. To counteract this degradation, a thresholding technique is introduced during the model training phase. In particular, a predefined threshold is set, and any weight in a layer that exceeds the limit defined by the threshold is zeroed out. In some examples, the threshold value can be established at 1, and any weight in a layer that exceeds the value of one is set to a value of zero.

Implementing this thresholding technique has multiple advantages. First, the thresholding technique can ensure that the weights are confined to a range that can be more accurately and easily represented when quantized to integers. Second, the thresholding technique inadvertently serves as a form of regularization akin to dropout, which can be beneficial for the network's generalization capabilities. As a result of the thresholding approach, the quality of the quantized model is significantly enhanced, leading to improved performance post-quantization.

In various examples, when the training technique is employed to develop a PSNS model on a laptop, significant improvements in SNR and SDNR, as well as fan noise reduction, are observed. The fan noise reduction is measured as the difference in SNR improvement observed during scenarios of low (1% CPU utilization) and high (100% CPU utilization) demand on the Device Under Test (DUT). The results on based on an assumption is that the fan of the DUT is likely to be active during periods of high CPU utilization. The results demonstrate that the PSNS 2.0 model, described herein, exhibits a greater difference in SNR improvement between these two states, which substantiates the model's enhanced ability to reduce fan noise. This is evident in the platform version of the model, confirming its effectiveness in real-world usage scenarios when fan noise is present. Table 3 below presents results showcasing these improvements in the third column.

TABLE 3

|  | PSNS 1.0 | PSNS 2.0 |
|---|---|---|
| SNR improvement [dB] | 8.89 | 15.75 |
| SDNR improvement [dB] | 6.29 | 9.71 |
| Fan noise reduction [dB] | 0 | 11.37 |

*Example Method for Platform Fan Noise Suppression*

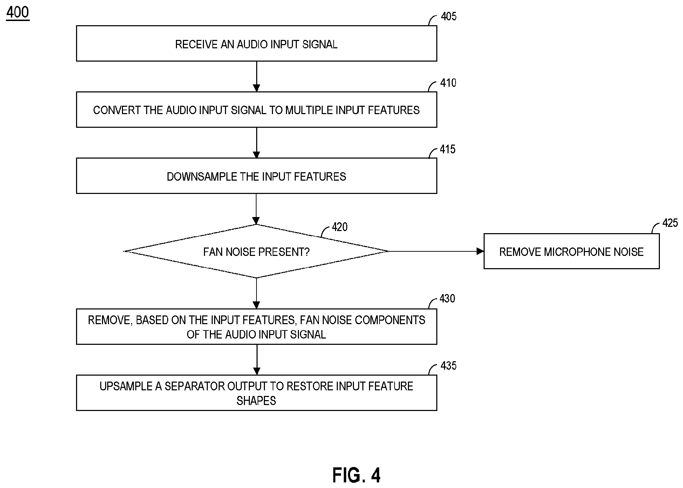

FIG. 4 is a chart of a method 400 that can be used for a platform self-noise suppression system, in accordance with various embodiments. At step 405, an audio input signal is received at a platform self-noise suppression system. The audio input signal can be received at a feature extractor, which can include a LL-STFT, as described above, for example with respect to FIGS. 2C and 2D. At step 410, the audio input signal is converted to multiple input features. Features can include frequencies, frequency bands, amplitudes, and other audio signal information. At step 415, the input features are received at a RNN-Mixer such as a RRM or an LRM, as described above. In particular, the input features are received at a downsample block such as the downsample block 110. The downsample block downsamples the input features and outputs a downsampled input feature tensor to a separator.

At step 420, it is determined whether platform fan noise is present in the input. In some examples, the weights and biases of the neural network processing the input adjust network behavior, which can include removing platform fan noise. When there is no fan noise present, the method 400 proceeds to step 425 and removes microphone noise and/or other platform self-noise. When there is fan noise present in the signal, the method 400 proceeds to step 430. At step 430, fan noise components are removed from the audio input signal based on the input features. At step 435, the separator output is upsampled to restore input feature shapes.

*Example DNN System*

FIG. 5 is a block diagram of a deep learning system 500 that can be used for a platform self-noise suppression system, in accordance with various embodiments. In some embodiments, the deep learning system 500 is a deep neural network (DNN). The deep learning system 500 trains DNNs for various tasks, including, for example, noise reduction such as platform fan noise reduction. In In the embodiments of FIG. 5, the deep learning system 500 includes an interface module 510, a training module 530, a validation module 540, a Platform Self-Noise Suppression Module 520, and a datastore 560. In other embodiments, alternative configurations, different or additional components may be included in the deep learning system 500. Further, functionality attributed to a component of the deep learning system 500 may be accomplished by a different component included in the deep learning system 500 or a different module or system, such as any of the neural networks and/or deep learning systems described herein.

The interface module 510 facilitates communications of the deep learning system 500 with other modules or systems. For example, the interface module 510 establishes communications between the deep learning system 500 with an external database to receive data that can be used to train DNNs or input into DNNs to perform tasks. As another example, the interface module 510 supports the deep learning system 500 to distribute DNNs to other systems, e.g., computing devices configured to apply DNNs to perform tasks.

The training module 530 trains DNNs by using a training dataset. In some examples, the training dataset can be generated using synthetic audio samples. In some examples, multiple datasets can be used to provide a variety of audio source types (e.g., human speech, instruments, animals, environmental sounds, etc.). For each sample in a dataset, platform fan noise can be added. To generate the training output, the convolution module 341 performs audio enhancement and fan noise cancelation to the audio signals.

In an embodiment where the training module 530 trains a DNN to enhance microphone SNR and SDNR and reduce fan noise, and generate an output enhanced audio signal, the training dataset includes training signals including multiple sources (including the target audio signal), and training labels. The training labels describe the target sound sources in the training signals, the microphone noise, and the platform noise. The DNN operates on the combined signals to reduce noise from various sources, and the training module 530 can compare the enhanced signals generated by the DNN to the original signals. In some embodiments, a part of the training dataset may be used to initially train the DNN, and the rest of the training dataset may be held back as a validation subset used by the validating module 540 to validate performance of a trained DNN. The portion of the training dataset not including the tuning subset and the validation subset may be used to train the DNN.

The training module 530 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the DNN. An epoch may include one or more batches. The number of epochs may be 3, 30, 300, 400, or even larger.

The training module 530 defines the architecture of the DNN, e.g., based on some of the hyperparameters. The architecture of the DNN includes an input layer, an output layer, and a plurality of hidden layers. The input layer of an DNN may include tensors (e.g., a multidimensional array) specifying attributes of the input signal, such as frequency, volume, and other spectral characteristics. The output layer includes labels of angles and/or locations of sound sources in the input layer. The hidden layers are layers between the input layer and output layer. The hidden layers include one or more convolutional layers and one or more other types of layers, such as pooling layers, fully connected layers, normalization layers, softmax or logistic layers, and so on. The convolutional layers of the DNN abstract the input signals to perform feature extraction. In some examples, the feature extraction is based on a spectrogram of an input sound signal. A pooling layer is used to reduce the volume of input signal after convolution. It is used between two convolution layers. A fully connected layer involves weights, biases, and neurons. It connects neurons in one layer to neurons in another layer. It is used to classify signals between different categories by training. Note that training a DNN is different from using the DNN in real-time and when using a DNN to process data that is received in real-time, latency can become an issue that is not present during training, when the data set can be pre-loaded.

In the process of defining the architecture of the DNN, the training module 530 also adds an activation function to a hidden layer or the output layer. An activation function of a layer transforms the weighted sum of the input of the layer to an output of the layer. The activation function may be, for example, a rectified linear unit activation function, a tangent activation function, or other types of activation functions.

After the training module 530 defines the architecture of the DNN, the training module 530 inputs a training dataset into the DNN. The training dataset includes a plurality of training samples. An example of a training sample includes source location of a feature in an audio sample and a ground-truth location of the feature. The training module 530 modifies the parameters inside the DNN ("internal parameters of the DNN") to minimize the error between labels of the training features that are generated by the DNN and the ground-truth labels of the features. The internal parameters include weights of filters in the convolutional layers of the DNN. In some embodiments, the training module 530 uses a cost function to minimize the error.

The training module 530 may train the DNN for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After the training module 530 finishes the predetermined number of epochs, the training module 530 may stop updating the parameters in the DNN. The DNN having the updated parameters is referred to as a trained DNN.

The validation module 540 verifies accuracy of trained or compressed DNNs. In some embodiments, the validation module 540 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the validation module 540 may determine an accuracy score measuring the precision, recall, or a combination of precision and recall of the DNN. The validating module 540 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The validation module 540 may compare the accuracy score with a threshold score. In an example where the validation module 540 determines that the accuracy score of the augmented model is less than the threshold score, the validation module 540 instructs the training module 530 to re-train the DNN. In one embodiment, the training module 530 may iteratively re-train the DNN until the occurrence of a stopping condition, such as the accuracy measurement indication that the DNN may be sufficiently accurate, or a number of training rounds having taken place.

The inference module 550 applies the trained or validated DNN to perform tasks. The inference module 550 may run inference processes of a trained or validated DNN. In some examples, inference makes use of the forward pass to produce model-generated output for unlabeled real-world data. For instance, the inference module 550 may input real-world data into the DNN and receive an output of the DNN. The output of the DNN may provide a solution to the task for which the DNN is trained for.

The inference module 550 may aggregate the outputs of the DNN to generate a final result of the inference process. In some embodiments, the inference module 550 may distribute the DNN to other systems, e.g., computing devices in communication with the deep learning system 550, for the other systems to apply the DNN to perform the tasks. The distribution of the DNN may be done through the interface module 510. The computing devices may be connected to the deep learning system 500 through a network.

The DNN may include a convolution module, which can perform platform self-noise suppression. In some examples, the convolution module 520 can also perform additional real-time data processing, such as for speech enhancement, dynamic noise suppression, and/or self-noise silencing. The convolution module can include time domain encoder, a frequency domain encoder, and a time domain decoder. In some examples, the time domain encoder is a convolutional time domain encoder, the frequency domain encoder is a convolutional frequency domain spectrum encoder, and the time domain decoder is a convolutional time domain decoder. In other embodiments, alternative configurations, different or additional components may be included in the convolution module. Further, functionality attributed to a component of the convolution module may be accomplished by a different component included in the convolution module, the deep learning system 500, or a different module or system.

The frequency encoder receives Short-Time Fourier transform (STFT) spectra. In various examples, the input data to the frequency encoder is frequency domain STFT spectra derived from input audio data. The input data includes input tensors which can each include multiple frames of data.

In various examples, a STFT is a Fourier-related transform used to determine the sinusoidal frequency and phase content of local sections of a signal as it changes over time. Generally, STFTs are computed by dividing a longer time signal into shorter segments of equal length and then computing the Fourier transform separately on each shorter segment. This results in the Fourier spectrum on each shorter segment. The changing spectra can be plotted as a function of time, for instance as a spectrogram. In some examples, the STFT is a discrete time STFT, such that the data to be transformed is broken up into tensors or frames (which usually overlap each other, to reduce artifacts at the boundary). Each tensor or frame is Fourier transformed, and the complex result is added to a matrix, which records magnitude and phase for each point in time and frequency. In some examples, an input tensor has a size of $H \times W \times C$, where $H$ denotes the height of the input tensor (e.g., the number of rows in the input tensor or the number of data elements in a row), $W$ denotes the width of the input tensor (e.g., the number of columns in the input tensor or the number of data elements in a row), and $C$ denotes the depth of the input tensor (e.g., the number of input channels).

An inverse STFT can be generated by inverting the STFT. In various examples, the STFT is processed by the DNN, and it is then inverted at the decoder, or before being input to the decoder. By inverting the STFT, the encoded frequency domain signal from the frequency encoder can be recombined with the encoded time domain signal from the time encoder. One way of inverting the STFT is by using the overlap-add method, which also allows for modifications to the STFT complex spectrum. This makes for a versatile signal processing method, referred to as the overlap and add with modifications method. In various examples, the output from the decoder is an audio output signal representing the input signal for a selected audio source. In some examples, the output from the decoder includes multiple separated audio output signals, each representing the input signal for a respective input audio source.

The datastore 560 stores data received, generated, used, or otherwise associated with the deep learning system 500. For example, the datastore 560 stores the datasets used by the training module 530 and validation module 540. The datastore 560 may also store data such as the hyperparameters for training DNNs, internal parameters of trained DNNs (e.g., weights, etc.), data for sparsity acceleration (e.g., sparsity bitmap, etc.), and so on. In some embodiments the datastore 560 is a component of the deep learning system 500. In other embodiments, the datastore 560 may be external to the deep learning system 500 and communicate with the deep learning system 500 through a network.

*Example Computing Device*

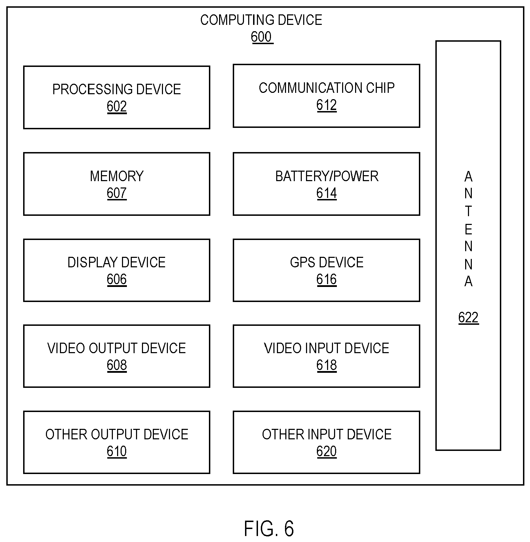

FIG. 6 is a block diagram of an example computing device 600, in accordance with various embodiments. In some embodiments, the computing device 600 may be used for at least part of the systems in FIGS. 1, 3A-3B, 5. A number of components are illustrated in FIG. 6 as included in the computing device 600, but any one or more of these components may be omitted or duplicated, as suitable for the application. In some embodiments, some or all of the components included in the computing device 600 may be attached to one or more motherboards. In some embodiments, some or all of these components are fabricated onto a single system on a chip (SoC) die. Additionally, in various embodiments, the computing device 600 may not include one or more of the components illustrated in FIG. 6, but the computing device 600 may include interface circuitry for coupling to the one or more components. For example, the computing device 600 may not include a display device 606, but may include display device interface circuitry (e.g., a connector and driver circuitry) to which a display device 606 may be coupled. In another set of examples, the computing device 600 may not include a video input device 618 or a video output device 608, but may include video input or output device interface circuitry (e.g., connectors and supporting circuitry) to which a video input device 618 or video output device 608 may be coupled.

The computing device 600 may include a processing device 602 (e.g., one or more processing devices). The processing device 602 processes electronic data from registers and/or memory to transform that electronic data into other electronic data that may be stored in registers and/or memory. The computing device 600 may include a memory 604, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 604 may include memory that shares a die with the processing device 602. In some embodiments, the memory 604 includes one or more non-transitory computer-readable media storing instructions executable for occupancy mapping or collision detection, e.g., the method 400 described above in conjunction with FIG. 4 or some operations performed by the DNN system 500 in FIG. 5. The instructions stored in the one or more non-transitory computer-readable media may be executed by the processing device 602.

In some embodiments, the computing device 600 may include a communication chip 612 (e.g., one or more communication chips). For example, the communication chip 612 may be configured for managing wireless communications for the transfer of data to and from the computing device 600. The term "wireless" and its derivatives may be used to describe circuits, devices, systems, methods, techniques, communications channels, etc., that may communicate data using modulated electromagnetic radiation through a nonsolid medium. The term does not imply that the associated devices do not contain any wires, although in some embodiments they might not.

The communication chip 612 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 812 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 512 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 512 may operate in accordance with code-division multiple access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 512 may operate in accordance with other wireless protocols in other embodiments. The computing device 600 may include an antenna 622 to facilitate wireless communications and/or to receive other wireless communications (such as AM or FM radio transmissions).

In some embodiments, the communication chip 612 may manage wired communications, such as electrical, optical, or any other suitable communication protocols (e.g., the Ethernet). As noted above, the communication chip 612 may include multiple communication chips. For instance, a first communication chip 612 may be dedicated to shorter-range wireless communications such as Wi-Fi or Bluetooth, and a second communication chip 612 may be dedicated to longer-range wireless communications such as global positioning system (GPS), EDGE, GPRS, CDMA, WiMAX, LTE, EV-DO, or others. In some embodiments, a first communication chip 612 may be dedicated to wireless communications, and a second communication chip 612 may be dedicated to wired communications.

The computing device 600 may include battery/power circuitry 614. The battery/power circuitry 614 may include one or more energy storage devices (e.g., batteries or capacitors) and/or circuitry for coupling components of the computing device 600 to an energy source separate from the computing device 600 (e.g., AC line power).

The computing device 600 may include a display device 606 (or corresponding interface circuitry, as discussed above). The display device 606 may include any visual indicators, such as a heads-up display, a computer monitor, a projector, a touchscreen display, a liquid crystal display (LCD), a light-emitting diode display, or a flat panel display, for example.

The computing device 600 may include a video output device 608 (or corresponding interface circuitry, as discussed above). The video output device 608 may include any device that generates an audible indicator, such as speakers, headsets, or earbuds, for example.

The computing device 600 may include a video input device 618 (or corresponding interface circuitry, as discussed above). The video input device 618 may include any device that generates a signal representative of a sound, such as microphones, microphone arrays, or digital instruments (e.g., instruments having a musical instrument digital interface (MIDI) output).

The computing device 600 may include a GPS device 616 (or corresponding interface circuitry, as discussed above). The GPS device 616 may be in communication with a satellite-based system and may receive a location of the computing device 600, as known in the art.

The computing device 600 may include another output device 610 (or corresponding interface circuitry, as discussed above). Examples of the other output device 610 may include a video codec, a video codec, a printer, a wired or wireless transmitter for providing information to other devices, or an additional storage device.

The computing device 600 may include another input device 620 (or corresponding interface circuitry, as discussed above). Examples of the other input device 620 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 600 may have any desired form factor, such as a handheld or mobile computer system (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 600 may be any other electronic device that processes data.

*Select Examples*

Example 1 provides a computer-implemented method for audio enhancement, including receiving an audio input signal; converting the audio input signal to a plurality of input features, each input feature including a magnitude spectrum of a sample of the audio input signal; downsampling each of the plurality of input features; determining if the audio input signal includes fan noise generated by a platform fan, based on the downsampled input features; if the audio input signal includes fan noise generated by a platform fan: outputting noise-reduced features by removing fan noise components from the downsampled input features using a neural network; and upsampling the noise-reduced features to output a noise-reduced signal.

Example 2 provides the method of example 1, where the upsampling the noise-reduced features includes increasing a tensor height of each of the input features and reducing a number of channels of each of the noise-reduced features.

Example 3 provides the method of any of examples 1-2, where the audio input signal is converted to the plurality of input features using a Short-Time Fourier Transform (STFT).

Example 4 provides the method of example 3, where the STFT is a low latency STFT.

Example 5 provides the method of any of examples 1-3, where downsampling each of the input features includes reducing a tensor height of each of the input features and increasing a number of channels of each of the input features.

Example 6 provides the method of example 5, where downsampling further includes a pointwise convolution applied to each of the plurality of input features to group each of the plurality of input features into subgroups, where each respective subgroup includes similar features.

Example 7 provides the method any of examples 1-6, where removing the fan noise components from the audio input signal using the neural network includes removing the fan noise components using a recurrent neural network.

Example 8 provides the method of example 7, where the recurrent neural network includes a custom gated recurrent unit layer and a plurality of recurrent neural network blocks.

Example 9 provides the method of example 7, further including, training the plurality of recurrent neural network blocks, where during training, any weight in the plurality of recurrent neural network blocks having a value greater than a selected threshold is reset to have a zero value.

Example 10 provides one or more non-transitory computer-readable media storing instructions executable to perform operations, the operations including receiving an audio input signal; converting the audio input signal to a plurality of input features, each input feature including a magnitude spectrum of a sample of the audio input signal; downsampling each of the plurality of input features; determining if the audio input signal includes fan noise generated by a platform fan, based on the downsampled input features; if the audio input signal includes fan noise generated by a platform fan: outputting noise-reduced features by removing fan noise components from the downsampled input features using a neural network; and upsampling the noise-reduced features to output a noise-reduced signal.

Example 11 provides the computer-readable media of example 10, where the upsampling the noise-reduced features includes increasing a tensor height of each of the input features and reducing a number of channels of each of the noise-reduced features.

Example 12 provides the computer-readable media according to any of examples 10-11, where the audio input signal is converted to the plurality of input features using a low-latency Short-Time Fourier Transform (STFT).

Example 13 provides the computer-readable media according to any of examples 10-12, where downsampling each of the input features includes reducing a tensor height of each of the input features and increasing a number of channels of each of the input features.

Example 14 provides the computer-readable media of example 13, where downsampling further includes a pointwise convolution applied to each of the plurality of input features to group each of the plurality of input features into subgroups, where each respective subgroup includes similar features.

Example 15 provides the computer-readable media of according to any of examples 10-14, where removing the fan noise components from the audio input signal using the neural network includes removing the fan noise components using a recurrent neural network.

Example 16 provides the computer-readable media of example 15, where the recurrent neural network includes a custom gated recurrent unit layer and a plurality of recurrent neural network blocks.

Example 17 provides the computer-readable media of example 15, further including, training the plurality of recurrent neural network blocks, where during training, any weight in the plurality of recurrent neural network blocks having a value greater than a selected threshold is reset to have a zero value.

Example 18 provides an apparatus, including a computer processor for executing computer program instructions; and a non-transitory computer-readable memory storing computer program instructions executable by the computer processor to perform operations including receiving an audio input signal; converting the audio input signal to a plurality of input features, each input feature including a magnitude spectrum of a sample of the audio input signal; downsampling each of the plurality of input features; determining if the audio input signal includes fan noise generated by a platform fan, based on the downsampled input features; if the audio input signal includes fan noise generated by a platform fan: outputting noise-reduced features by removing fan noise components from the downsampled input features using a neural network; and upsampling the noise-reduced features to output a noise-reduced signal.

Example 19 provides the apparatus of example 18, where the upsampling the noise-reduced features includes increasing a tensor height of each of the input features and reducing a number of channels of each of the noise-reduced features.

Example 20 provides the apparatus according to any of examples 18-19, the operations further including converting an input audio signal to a frequency domain and generating the plurality of input features using a low-latency STFT.

Example 21 provides a computer-implemented method for audio enhancement, including receiving an audio input signal; converting the audio input signal to a plurality of input features, each input feature including a magnitude spectrum of a sample of the audio input signal; downsampling each of the plurality of input features; determining the audio input signal includes fan noise generated by a platform fan, based on the downsampled input features; removing fan noise components from the audio input signal at a separator, based on the downsampled input features, and outputting noise-reduced features; upsampling the noise-reduced features to restore an original feature shape.

Example 22 provides the method according to any of examples 1-9 and 21, further including converting an input audio signal to the frequency domain and generating the plurality of input features using a STFT.

Example 23 provides the method of example 22, where the STFT is a low-latency STFT.

Example 24 provides the method according to any of examples 1-9 and 21-23, where downsampling the input features includes reducing tensor height and increasing a number of channels.

Example 25 provides the method of example 24, where downsampling further includes a pointwise convolution applied to each of the plurality of input features to group each of the plurality of input features into subgroups, where each respective subgroup includes similar information.

Example 26 provides the method according to any of examples 1-9 and 21-25, where removing the fan noise components includes denoising a magnitude component of the audio input signal while phase component remains unaltered.

Example 27 provides the method according to any of examples 1-9 and 21-26, where removing the fan noise components from the audio input signal at the separator includes removing the fan noise components at a plurality of recurrent neural network blocks.

Example 28 provides the method of example 27, where the separator includes a custom gated recurrent unit layer and the plurality of recurrent neural network blocks.

Example 29 provides the method of example 27, further including, training the plurality of recurrent neural network blocks, where during training, any weight in the plurality of recurrent neural network blocks having a value greater than a selected threshold is reset to have a zero value.

Example 30 provides one or more non-transitory computer-readable media storing instructions executable to perform operations, the operations including receiving an audio input signal; converting the audio input signal to a plurality of input features, each input feature including a magnitude spectrum of a sample of the audio input signal; downsampling each of the plurality of input features; determining the audio input signal includes fan noise generated by a platform fan, based on the downsampled input features; removing fan noise components from the audio input signal at a separator, based on the downsampled input features, and outputting noise-reduced features; upsampling the noise-reduced features to restore an original feature shape.

Example 31 provides the computer-readable media according to any of examples 10-17 and 30, the operations further including converting an input audio signal to the frequency domain and generating the plurality of input features using a low-latency STFT.

Example 32 provides the computer-readable media according to any of examples 10-17 and 30-31, where downsampling the input features includes reducing a tensor height and increasing a number of channels.

Example 33 provides the computer-readable media of example 32, where downsampling further includes a pointwise convolution applied to each of the plurality of input features to group each of the plurality of input features into subgroups, where each respective subgroup includes similar information.

Example 34 provides the computer-readable media according to any of examples 10-17 and 30-33, where removing the fan noise components includes denoising a magnitude component of the audio input signal while a phase component remains unaltered.

Example 35 provides the computer-readable media according to any of examples 10-17 and 30-34, where removing the fan noise components from the audio input signal at the separator includes removing the fan noise components at a plurality of recurrent neural network blocks.

Example 36 provides the computer-readable media of example 35, where the separator includes a custom gated recurrent unit layer and the plurality of recurrent neural network blocks.

Example 37 provides the computer-readable media of example 35, further including, training the plurality of recurrent neural network blocks, where during training, any weight in the plurality of recurrent neural network blocks having a value greater than a selected threshold is reset to have a zero value.

Example 38 provides an apparatus, including a computer processor for executing computer program instructions; and a non-transitory computer-readable memory storing computer program instructions executable by the computer processor to perform operations including receiving an audio input signal; converting the audio input signal to a plurality of input features, each input feature including a magnitude spectrum of a sample of the audio input signal; downsampling each of the plurality of input features; determining the audio input signal includes fan noise generated by a platform fan, based on the downsampled input features; removing fan noise components from the audio input signal at a separator, based on the downsampled input features, and outputting noise-reduced features; upsampling the noise-reduced features to restore an original feature shape.

Example 39 provides the apparatus according to any of examples 18-20 and 38, the operations further including converting an input audio signal to the frequency domain and generating the plurality of input features using a low-latency STFT.

Example 40 provides the apparatus according to any of examples 18-20 and 38-39, where downsampling the input features includes reducing a tensor height and increasing a number of channels.

Example 41 provides the apparatus of example 40, where downsampling further includes a pointwise convolution applied to each of the plurality of input features to group each of the plurality of input features into subgroups, where each respective subgroup includes similar features.

Example 42 provides the apparatus according to any of examples 18-20 and 38-41, where removing the fan noise components includes denoising a magnitude component of the audio input signal while a phase component remains unaltered.

Example 43 provides the apparatus according to any of examples 18-20 and 38-42, where removing the fan noise components from the audio input signal using the neural network includes using a recurrent neural network.

Example 44 provides the apparatus of example 43, where the recurrent neural network includes a custom gated recurrent unit layer and a plurality of recurrent neural network blocks.

Example 45 provides the apparatus of example 43, further including, training the plurality of recurrent neural network blocks, where during training, any weight in the plurality of recurrent neural network blocks having a value greater than a selected threshold is reset to have a zero value.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

**Claims**

1. A computer-implemented method for audio enhancement, comprising:

   receiving an audio input signal;
   converting the audio input signal to a plurality of input features, each input feature including a magnitude spectrum of a sample of the audio input signal;
   downsampling each of the plurality of input features;
   determining if the audio input signal includes fan noise generated by a platform fan, based on the downsampled input features;
   if the audio input signal includes fan noise generated by a platform fan:

      outputting noise-reduced features by removing fan noise components from the downsampled input features using a neural network; and
      upsampling the noise-reduced features to output a noise-reduced signal.

2. The method of claim 1, wherein the upsampling the noise-reduced features comprises increasing a tensor height of each of the input features and reducing a number of channels of each of the noise-reduced features.

3. The method of claims 1-2, wherein the audio input signal is converted to the plurality of input features using a Short-Time Fourier Transform (STFT).

4. The method of claim 3, wherein the STFT is a low latency STFT.

5. The method of claims 1-4, wherein downsampling each of the input features includes reducing a tensor height of each of the input features and increasing a number of channels of each of the input features.

6. The method of claim 5, wherein downsampling further includes a pointwise convolution applied to each of the plurality of input features to group each of the plurality of input features into subgroups, wherein each respective subgroup includes similar features.

7. The method of claims 1-6, wherein removing the fan noise components from the audio input signal using the neural network includes removing the fan noise components using a recurrent neural network.

8. The method of claim 7, wherein the recurrent neural network includes a custom gated recurrent unit layer and a plurality of recurrent neural network blocks.

9. The method of claim 7, further comprising, training the plurality of recurrent neural network blocks, wherein during training, any weight in the plurality of recurrent neural network blocks having a value greater than a selected threshold is reset to have a zero value.

10. One or more non-transitory computer-readable media storing instructions executable to perform operations, the operations comprising:

    receiving an audio input signal;
    converting the audio input signal to a plurality of input features, each input feature including a magnitude spectrum of a sample of the audio input signal;
    downsampling each of the plurality of input features;
    determining if the audio input signal includes fan noise generated by a platform fan, based on the downsampled input features;

if the audio input signal includes fan noise generated by a platform fan:

outputting noise-reduced features by removing fan noise components from the downsampled input features using a neural network; and
upsampling the noise-reduced features to output a noise-reduced signal.

11. The computer-readable media of claim 10, wherein the upsampling the noise-reduced features comprises increasing a tensor height of each of the input features and reducing a number of channels of each of the noise-reduced features.

12. The computer-readable media of claims 10-11, wherein downsampling each of the input features includes reducing a tensor height of each of the input features and increasing a number of channels of each of the input features.

13. The computer-readable media of claim 12, wherein downsampling further includes a pointwise convolution applied to each of the plurality of input features to group each of the plurality of input features into subgroups, wherein each respective subgroup includes similar features.

14. The computer-readable media of claims 10-13, wherein removing the fan noise components from the audio input signal using the neural network includes removing the fan noise components using a recurrent neural network.

15. An apparatus, comprising:

a computer processor for executing computer program instructions; and
a non-transitory computer-readable memory storing computer program instructions executable by the computer processor to perform operations comprising:

receiving an audio input signal;
converting the audio input signal to a plurality of input features, each input feature including a magnitude spectrum of a sample of the audio input signal;
downsampling each of the plurality of input features;
determining if the audio input signal includes fan noise generated by a platform fan, based on the downsampled input features;
if the audio input signal includes fan noise generated by a platform fan:
outputting noise-reduced features by removing fan noise components from the
downsampled input features using a neural network; and
upsampling the noise-reduced features to output a noise-reduced signal.

100

```
┌─────────────────┐      ┌─────────────────┐      ┌─────────────────┐
│   DOWNSAMPLE    │      │    SEPARATOR    │      │    UPSAMPLE     │
→│      110        │─────→│      120        │─────→│      140        │→
└─────────────────┘      └─────────────────┘      └─────────────────┘
```

**FIG. 1**

FIG. 2A

FIG. 2B

FIG. 2C

FIG. 2D

300

SIGMOID
360

DOWNSAMPLE 110

PIXEL
UNSHUFFLE
305

CONV1D
(1X1)
310

SEPARATOR 320

RNN
BLOCK
325

RNN
BLOCK
330

...

RNN
BLOCK
335

UPSAMPLE 340

CONV1D
(1X1)
345

CONV1D
(3X1)
355

PIXEL
SHUFFLE
358

RNN BLOCK 325

GRU
365

FF
370

ReLU

FF
375

378

+

CONV1D
(3X1)
380

ReLU

SCALING
385

CONV1D
(1X1)
390

ReLU

**FIG. 3A**

EP 4 704 081 A1

350

| DOWNSAMPLE 110 | | SEPARATOR 320 | | | | UPSAMPLE 340 | | |
|---|---|---|---|---|---|---|---|---|

DOWNSAMPLE 110

PIXEL UNSHUFFLE 305 → CONV1D (1X1) 310

SEPARATOR 320

RNN BLOCK 328 → RNN BLOCK 330 ... RNN BLOCK 335

UPSAMPLE 340

CONV1D (1X1) 345 → PIXEL SHUFFLE 358

SIGMOID 360

RNN BLOCK 328

FF 370 ReLU → FF 375 → + → SCALING 385 → CONV1D (1X1) 390 ReLU

**FIG. 3B**

24

400

RECEIVE AN AUDIO INPUT SIGNAL ⟋ 405

CONVERT THE AUDIO INPUT SIGNAL TO MULTIPLE INPUT FEATURES ⟋ 410

DOWNSAMPLE THE INPUT FEATURES ⟋ 415

FAN NOISE PRESENT? ⟋ 420 → REMOVE MICROPHONE NOISE ⟋ 425

REMOVE, BASED ON THE INPUT FEATURES, FAN NOISE COMPONENTS OF THE AUDIO INPUT SIGNAL ⟋ 430

UPSAMPLE A SEPARATOR OUTPUT TO RESTORE INPUT FEATURE SHAPES ⟋ 435

FIG. 4

Deep Learning System
500

Interface Module
510

Platform Self-Noise
Suppression Module
520

Training Module
530

Validation Module
540

Inference Module
550

Datastore
560

FIG. 5

FIG. 6

| | Europäisches Patentamt European Patent Office Office européen des brevets | **EUROPEAN SEARCH REPORT** | **Application Number** EP 25 18 8299 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 113 129 919 A (SHANGHAI MAITU INFORMATION TECH CO LTD) 16 July 2021 (2021-07-16) * figures 1-4 * * paragraphs [0049], [0056], [0063] * ----- | 1-15 | INV. G10L21/0208 G06N3/02 G10L25/30 |
| A | US 2023/206938 A1 (DENG JIACHUAN [US] ET AL) 29 June 2023 (2023-06-29) * figure 2 * * paragraphs [0008], [0020], [0021], [0023] * ----- | 1-15 | |
| A | US 2023/197098 A1 (YANG SUNG UK [KR]) 22 June 2023 (2023-06-22) * figure 1 * ----- | 1-15 | |

| | TECHNICAL FIELDS SEARCHED (IPC) |
|---|---|
| | G10L G06N |

The present search report has been drawn up for all claims

| Place of search | Date of completion of the search | Examiner |
|---|---|---|
| Munich | 7 November 2025 | Chétry, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 8299

07-11-2025

| Patent document cited in search report | | Publication date | Patent family member(s) | | Publication date |
|---|---|---|---|---|---|
| CN 113129919 | A | 16-07-2021 | NONE | | |
| US 2023206938 | A1 | 29-06-2023 | US | 2023032785 A1 | 02-02-2023 |
| | | | US | 2023206938 A1 | 29-06-2023 |
| US 2023197098 | A1 | 22-06-2023 | JP | 2024502917 A | 24-01-2024 |
| | | | US | 2023197098 A1 | 22-06-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63687856